# EUROPEAN PATENT SPECIFICATION

(11) **EP 4 474 212 B1**
(45) Date of publication and mention of the grant of the patent: **18.03.2026**
(21) Application number: 23305917.9
(22) Date of filing: 08.06.2023
(51) Int. Cl.: B60N 2/30, B60N 2/24

(54) **STRUCTURAL UNIT FOR A LAND VEHICLE, WITH FOLDABLE SEAT**
BAUEINHEIT FÜR EIN LANDFAHRZEUG MIT KLAPPSITZ
UNITÉ DE STRUCTURE POUR UN VÉHICULE TERRESTRE, À SIÈGE RABATTABLE

(43) Date of publication of application: 11.12.2024
(73) Proprietor: ALSTOM Holdings, 93400 Saint-Ouen-sur-Seine (FR)
(72) Inventor: VERGNAUD, Romain, 79210 PRIN-DEYRANÇON (FR); GENDRON, Thomas, 17230 ANDILLY (FR)
(74) Representative: Plasseraud IP

(56) References cited:
- DE-A1- 102015 208 351
- FR-A1- 2 818 208

## Description

The present invention relates to a structural unit for a land vehicle, comprising a seat device and a support structure, the support structure comprising an upper surface, substantially horizontal, and a lateral surface, extending substantially vertically, the upper and lateral surfaces being joined by a first edge of the support structure ; the seat device comprising a first and a second sitting elements, the first sitting element being fixed to the upper surface of the support structure and forming a substantially horizontal first sitting surface ; the second sitting element comprising a second sitting surface.

In particular, the present invention relates to a structural unit comprising an additional seat for a driving cabin.

It is known to provide such an additional seat to a driving cabin, as disclosed in document DE102015208351. As the available space in the driving cabin is usually scarce, it is known to provide the additional seat as a foldable seat.

Such an additional seat may be used by a co-driver, assisting the driver in the driving operations and/or being trained by the driver. As such, it is advantageous to provide an ergonomic additional seat, allowing a sufficient view of the control panels of the driving cabin, without blocking an exit path of the cabin.

Besides, it is known from FR2818208 to provide a foldable structural unit comprising a seat device and a support structure.

The present invention aims to solve the above-mentioned problems. For this purpose, the invention relates to a structural unit of the aforementioned type according to claim 1, wherein the second sitting element is pivotally assembled to the first edge of the support structure between a folded and an unfolded configurations, so that, in the folded configuration, the second sitting surface is substantially parallel to the lateral surface of the support structure; and in the unfolded configuration, the second sitting surface is substantially horizontal and continuous with the first sitting surface, the first and second sitting surfaces forming a sitting area.

According to preferred embodiments, the structural unit may include one or more of the following features, considered alone or in any technically possible combination:
- the maintaining element comprises : a cavity arranged in the support structure and opening on the lateral surface ; and an arm able to slide in the cavity between the retracted and the deployed positions, so that, in the deployed position, an end of the arm is in contact with the second sitting element ;
- the structural unit also comprises a first and a second interlocking organs, situated respectively on the second sitting element of the seat device and on the maintaining element, said first and second interlocking organs being able to fix the second sitting element in the unfolded configuration to the maintaining element in the deployed position ;
- the structural unit also comprises a third and a fourth interlocking organs, situated respectively on the second sitting element of the seat device and on the lateral surface of the support structure, said third and fourth interlocking organs being able to fix the second sitting element in the folded configuration to the lateral surface ;
- the second sitting element comprises a second edge, substantially linear, and wherein the seat device comprises a hinge assembled to said second edge and to the first edge of the support structure, so that the second sitting element is pivotally assembled to the first edge ;
- the second sitting element comprises a third and a fourth edges, substantially linear and forming an angle comprised between 80° and 120° ;
- the seat device also comprises a backrest element, fixed to the support structure.

The invention also relates to a land vehicle comprising a driving cabin, the driving cabin comprising a control panel and a driver seat, the driving cabin also comprising a structural unit as described above.

According to a preferred embodiment, the structural unit is situated on a lateral structure of the driving cabin.

The invention will be easier to understand in view of the following description, provided solely as an example, and with reference to the appended drawings, wherein :
- Figure 1 is a schematic top view of a land vehicle comprising a structural unit according to an embodiment of the invention ; and
- Figure 2 and Figure 3 are cross-sectional views of the structural unit of Figure 1.

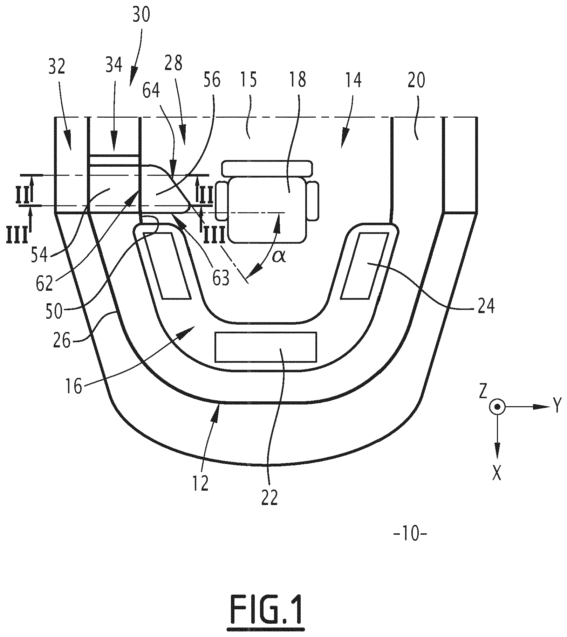

Figure 1 shows a land vehicle 10 according to an embodiment of the invention. Preferably, the land vehicle 10 is a rail vehicle, more preferably a tram or a streetcar. Alternatively, the land vehicle 10 is a train. According to another embodiment, the land vehicle 10 is a road vehicle.

The land vehicle 10 is designed for moving along a main direction, substantially horizontal. In the following description, an orthonormal basis (X, Y, Z), associated with the land vehicle 10, is considered. X represents the main direction, considered horizontal, and Z represents the vertical direction.

In the following description, the terms "front", "back", "behind", "lateral"... are understood relative to the main direction X.

The land vehicle 10 comprises a windshield 12, forming a front of the land vehicle, and a driving cabin 14, partly delimited by the windshield.

The driving cabin 14 comprises : a floor 15 ; a control panel 16 ; a driver seat 18 ; and lateral structures 20.

The control panel 16 is disposed at a front of the driving cabin 14. In the embodiment of Figure 1, the control panel 16 is substantially C-shaped with a central panel 22 and lateral panels 24.

The driver seat 18 is disposed behind the control panel 16, substantially aligned along X with the central panel 22. Preferably, the driver seat 18 is attached to the floor 15. For example, the driver seat 18 is able to rotate relative to the floor 15 around a vertical axis.

The lateral structures 20 laterally delimit the driving cabin 14. For example, the lateral structures 20 are disposed below lateral parts 26 of the windshield.

An exit path 28 of the driving cabin 14 for the driver is formed between the driver seat 18 and at least one of the lateral structures 20.

At least one of the lateral structures 20 includes a structural unit 30, said structural unit comprising a support structure 32 and a seat device 34. The structural unit 30 is substantially placed behind one of the lateral panels 24 of the control panel.

In the disclosed embodiment, the structural unit 30 also comprises : a maintaining element 36 ; a first 38 and a second 40 interlocking organs ; and a third 42 and a fourth 44 interlocking organs.

The support structure 32 is fixed to the floor 15 and comprises an upper surface 46, a lateral surface 48 and a first edge 50. The upper surface 46 is substantially horizontal. The lateral surface 48 is substantially vertical and extends from the floor 15. The upper 46 and lateral 48 surfaces are joined by the first edge 50.

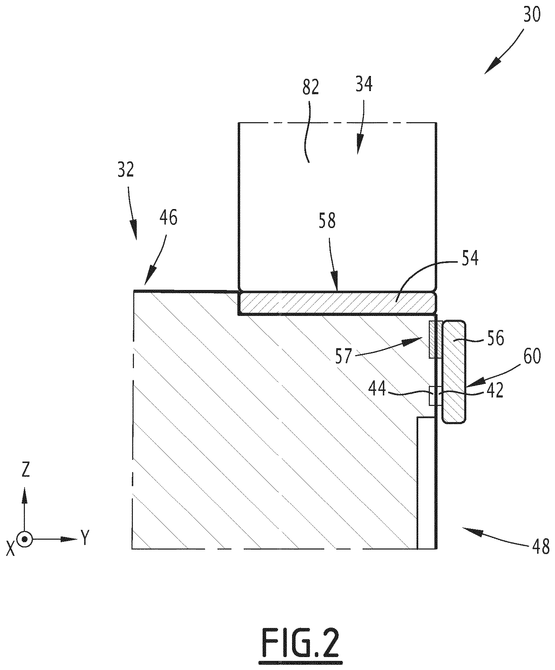

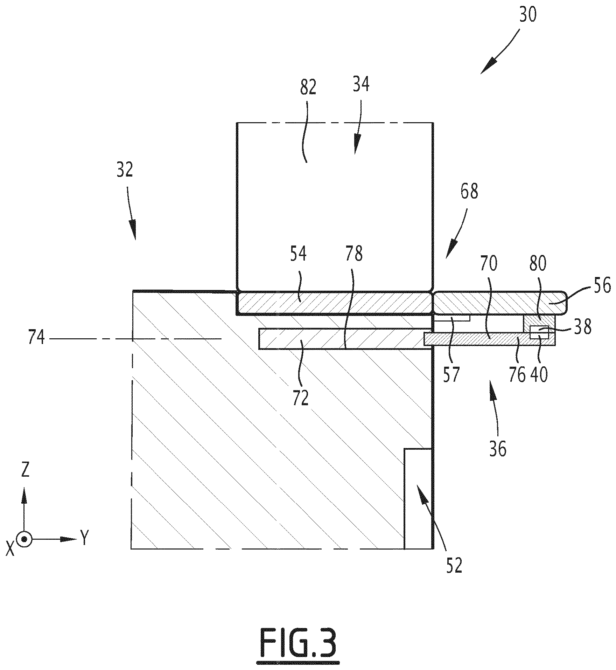

In the disclosed embodiment, as shown on Figures 2 and 3, the lateral surface 48 comprises a recess 52 disposed at a non-zero vertical distance from the first edge 50.

The seat device 34 comprises a first 54 and a second 56 sitting elements. In the disclosed embodiment, the seat device 34 also comprises a hinge 57.

The first sitting element 54 is fixed to the upper surface 46 of the support structure and forms a substantially horizontal first sitting surface 58, partially delimited by the first edge 50 of the support structure 32. Preferably, a height along Z of the lateral surface 48 of the support structure is selected according to the sitting position of a user on the first sitting surface 58.

The second sitting element 56 is substantially flat and comprises a first face, forming a second sitting surface 60, and a second, opposed face. In the disclosed embodiment, the second sitting element 56 also comprises a second 62, a third 63 and a fourth 64 edges, substantially linear, delimiting the second sitting surface 60, said second sitting surface 60 being substantially triangular.

The second sitting element 56 is pivotally assembled to the first edge 50 of the support structure 32. More precisely, the second sitting element 56 is rotatable relative to the support structure 32 between a folded configuration, shown on Figure 2, and an unfolded configuration, shown on Figures 1 and 3.

In the folded configuration, the second sitting surface 60 is disposed substantially vertically, parallel to the lateral surface 48 of the support structure 32.

In the unfolded configuration, the second sitting surface 60 is substantially horizontal and continuous with the first sitting surface 58, the first and second sitting surfaces forming a sitting area 68.

In the disclosed embodiment, the hinge 57 is assembled to the second edge 62 of the second sitting element 56 and to the first edge 50 of the support structure 32, so that the second sitting element 56 is pivotally assembled to the first edge 50.

In the disclosed embodiment, the third 63 and the fourth 64 edges of the second sitting element 56 form an angle α comprised between 80° and 120°, preferably comprised between 90° and 110°. In the unfolded configuration, both the third 63 and the fourth 64 edges are disposed above the floor 15. As detailed below, a user may place each of his/her legs above one of the third 63 and fourth 64 edges for an ergonomic sitting position.

The maintaining element 36 is designed for maintaining the second sitting element 56 in the unfolded configuration.

The maintaining element 36 is slidably assembled to the support structure 32 between a retracted position and a deployed position visible on Figure 3.

Preferably, the maintaining element 36 comprises an arm 70 and sliding means 72. The arm 70 extends along a main axis 74 between a first end 76 and a second end.

Preferably, the maintaining element 36 also comprises a cavity 78 arranged in the support structure 32 and opening on the lateral surface 48. The sliding means 72 allow the arm 70 to slide in the cavity 78 along the main axis 74, between the retracted and deployed positions.

Preferably, the first end 76 of the arm comprises gripping means (not shown), such as a slot, to allow a user to extract the arm from the cavity.

In the retracted position of the maintaining element 36, the first end 76 of the arm 70 is received in the cavity 78. More precisely, in the retracted position, the first end 76 of the arm and the opening of the cavity 78 are covered by the second sitting element 56 in the folded configuration.

In the deployed position of the maintaining element 36, the arm 70 bears a weight of the second sitting element 56 in the unfolded configuration.

In the disclosed embodiment, the second sitting element 56 also comprises a support block 80 fixed to its second face and forming a protrusion relative to said second face. In the deployed position of the maintaining element 36 and in the unfolded configuration of the second sitting element 56, the first end 76 of the arm 70 is in contact with the support block 80. In the retracted position of the maintaining element and in the folded configuration of the second sitting element 56, the support block 80 is disposed in the recess 52 of the lateral surface 48 (not shown on the Figures). The support block 80 allows the placement of the maintaining element 36 at a suitable vertical distance from the upper surface 46 of the support structure 32.

The first 38 and second 40 interlocking organs are situated respectively on the second sitting element 56 and on the maintaining element 36. Said first and second interlocking organs are able to cooperate for fixing the second sitting element 56 in the unfolded configuration to the maintaining element 36 in the deployed position. The security of a user seated in the sitting area 68, during movement of the land vehicle 10, is thus ensured.

In the disclosed embodiment, the first 38 and second 40 interlocking organs are situated respectively on the support block 80 and on the first end 76 of the arm 70. For example, the first 38 and second 40 interlocking organs are two parts of a mechanical lock, actuatable by a user.

The third 42 and the fourth 44 interlocking organs are situated respectively on the second sitting element 56 and on the lateral surface 48 of the support structure. The third and fourth interlocking organs are able to cooperate for fixing the second sitting element in the folded configuration to the lateral surface 48. The second sitting element 56 in the folded configuration is thus maintained during movement of the land vehicle 10, for a better security in the driving cabin 14.

For example, the third 42 and fourth 44 interlocking organs are two magnets, or a magnet and a ferromagnetic element. The magnetic strength between the two elements 42,44 is selected so that a user can unfold the second sitting element 56 by hand.

In the disclosed embodiment, the seat device 34 also comprises a backrest element 82, fixed to the support structure 32.

A method for using the structural unit 30 described above will now be detailed. When a driver takes place into the driver seat 18, the second sitting element 56 of the structural unit 30 is in the folded configuration, so that circulation in the exit path 28 is not impaired. When the driver is settled, another user, such as a co-driver or passenger, rotates the second sitting element 56 to the unfolded configuration, separating the third 42 and fourth 44 interlocking organs from each other. The user then draws the arm 70 out of the cavity 78, until the first end 76 of the arm is in contact with the support block 80. The user then actuates the first 38 and second 40 interlocking organs, before settling on the sitting area 68.

Preferably, the sitting area 68 is configured so that the user's field of view includes the control panel 16. More preferably, the sitting area 68 is configured so that the user's face is oriented toward the control panel 16, at least toward the central panel 22 and/or the lateral panel 24 opposed to the structural unit 30. Such a configuration is attainable due to the triangular shape of the second sitting element 56, allowing the user to place his/her legs above one of the third 63 and fourth 64 edges. A median plane of the user in the sitting position is thus inclined relative to a transversal direction Y, of an angle preferably superior to 15°.

After using the sitting area 68, the user disengages the first 38 and second 40 interlocking organs from each other ; and pushes the arm 70 back into the cavity 78. The second sitting element 56 is then rotated so that the third 42 and the fourth 44 interlocking organs engage with each other. The opening of the cavity 78 and the first end 76 of the arm are then covered by the second sitting element 56.

The exit path 28 of the driving cabin 14 is then liberated, allowing the driver to leave the driver seat 18 and to get out of the driving cabin 14.

## Claims

1. Structural unit (30) for a land vehicle (10), comprising a seat device (34) and a support structure (32), the support structure (32) comprising an upper surface (46), substantially horizontal, and a lateral surface (48), extending substantially vertically, the upper and lateral surfaces being joined by a first edge (50) of the support structure (32) ;
the seat device (34) comprising a first (54) and a second (56) sitting elements, the first sitting element (54) being fixed to the upper surface (46) of the support structure (32) and forming a substantially horizontal first sitting surface (58) ;
the second sitting element (56) comprising a second sitting surface (60),
the second sitting element (56) being pivotally assembled to the first edge (50) of the support structure (32) between a folded and an unfolded configurations,
so that, in the folded configuration, the second sitting surface (60) is substantially parallel to the lateral surface (48) of the support structure (32); and in the unfolded configuration, the second sitting surface (60) is substantially horizontal and continuous with the first sitting surface (58), the first (58) and second (60) sitting surfaces forming a sitting area (68).
the structural unit (30) being **characterized in that** it also comprises a maintaining element (36) slidably assembled to the support structure (32) between a retracted and a deployed positions, so that, in the deployed position, the maintaining element (36) bears a weight of the second sitting element (56) of the seat device (34) in the unfolded configuration.

2. Structural unit (30) according to claim 1, wherein the maintaining element (36) comprises : a cavity (78) arranged in the support structure (32) and opening on the lateral surface (48) ; and an arm (70) able to slide in the cavity (78) between the retracted and the deployed positions, so that, in the deployed position, an end (76) of the arm (70) is in contact with the second sitting element (56).

3. Structural unit (30) according to claim 1 or 2, also comprising a first (38) and a second (40) interlocking organs, situated respectively on the second sitting element (56) of the seat device (34) and on the maintaining element (36), said first and second interlocking organs being able to fix the second sitting element (56) in the unfolded configuration to the maintaining element (36) in the deployed position.

4. Structural unit (30) according to one of the preceding claims, also comprising a third (42) and a fourth (44) interlocking organs, situated respectively on the second sitting element (56) of the seat device and on the lateral surface (48) of the support structure (32), said third and fourth interlocking organs being able to fix the second sitting element (56) in the folded configuration to the lateral surface (48).

5. Structural unit (30) according to one of the preceding claims, wherein the second sitting element (56) comprises a second edge (62), substantially linear, and wherein the seat device (34) comprises a hinge (57) assembled to said second edge (62) and to the first edge (50) of the support structure (32), so that the second sitting element (56) is pivotally assembled to the first edge (50).

6. Structural unit (30) according to one of the preceding claims, wherein the second sitting element (56) comprises a third (63) and a fourth (64) edges, substantially linear and forming an angle (α) comprised between 80° and 120°.

7. Structural unit (30) according to one of the preceding claims, wherein the seat device (34) also comprises a backrest element (82), fixed to the support structure (32).

8. Land vehicle (10) comprising a driving cabin (14), the driving cabin (14) comprising a control panel (16) and a driver seat (18), the driving cabin (14) also comprising a structural unit (30) according to one of the preceding claims.

9. Land vehicle (10) according to claim 8, wherein the structural unit (30) is situated on a lateral structure (20) of the driving cabin (14).

## Patentansprüche

1. Struktureinheit (30) für ein Landfahrzeug (10), umfassend eine Sitzvorrichtung (34) und eine Halterungsstruktur (32), wobei die Halterungsstruktur (32) eine obere Fläche (46), welche im Wesentlichen horizontal ist, und eine laterale Fläche (48) umfasst, welche sich im Wesentlichen vertikal erstreckt, wobei die obere und die seitliche Fläche durch einen ersten Rand (50) der Halterungsstruktur (32) verbunden sind;
wobei die Sitzvorrichtung (34) ein erstes (54) und ein zweites (56) Sitzelement umfasst, wobei das erste Sitzelement (54) an der oberen Fläche (46) der Halterungsstruktur (32) fixiert ist und eine im Wesentlichen horizontale erste Sitzfläche (58) bildet;
wobei das zweite Sitzelement (56) eine zweite Sitzfläche (60) umfasst,
wobei das zweite Sitzelement (56) zwischen einer gefalteten und einer entfalteten Konfiguration schwenkbar an dem ersten Rand (50) der Halterungsstruktur (32) montiert ist,
so dass, in der gefalteten Konfiguration, die zweite Sitzfläche (60) im Wesentlichen parallel zu der lateralen Fläche (48) der Halterungsstruktur (32) ist; und, in der entfalteten Konfiguration, die zweite Sitzfläche (60) im Wesentlichen horizontal und durchgehend mit der ersten Sitzfläche (58) ist, wobei die erste (58) und die zweite (60) Sitzfläche einen Sitzbereich (68) bilden,
wobei die Struktureinheit (30) **dadurch gekennzeichnet ist, dass** sie außerdem ein Beibehaltungselement (36) umfasst, welches zwischen einer zurückgezogenen und einer ausgefahrenen Position verschiebbar an der Halterungsstruktur (32) montiert ist, so dass, in der ausgefahrenen Position, das Beibehaltungselement (36) ein Gewicht des zweiten Sitzelements (56) der Sitzvorrichtung (34) in der entfalteten Konfiguration trägt.

2. Struktureinheit (30) nach Anspruch 1, wobei das Beibehaltungselement (36) umfasst: einen Hohlraum (78), welcher in der Halterungsstruktur (32) angeordnet ist und sich an der lateralen Fläche (48) öffnet; und einen Arm (70), welcher dazu in der Lage ist, zwischen der zurückgezogenen und der ausgefahrenen Position in den Hohlraum (78) zu schieben, so dass, in der ausgefahrenen Position, ein Ende (76) des Arms (70) in Kontakt mit dem zweiten Sitzelement (56) ist.

3. Struktureinheit (30) nach Anspruch 1 oder 2, außerdem umfassend ein erstes (38) und ein zweites (40) Verriegelungselement, welche sich jeweils an dem zweiten Sitzelement (56) der Sitzvorrichtung (34) und an dem Beibehaltungselement (36) befinden, wobei das erste und das zweite Verriegelungselement dazu in der Lage sind, das zweite Sitzelement (56) in der ausgefahrenen Position in der entfalteten Konfiguration an dem Beibehaltungselement (36) zu fixieren.

4. Struktureinheit (30) nach einem der vorhergehenden Ansprüche, außerdem umfassend ein drittes (42) und ein viertes (44) Verriegelungselement, welche sich jeweils an dem zweiten Sitzelement (56) der Sitzvorrichtung und an der lateralen Fläche (48) der Halterungsstruktur (32) befinden, wobei das dritte und das vierte Verriegelungselement dazu in der Lage sind, das zweite Sitzelement (56) in der gefalteten Konfiguration an der lateralen Fläche (48) zu fixieren.

5. Struktureinheit (30) nach einem der vorhergehenden Ansprüche, wobei das zweite Sitzelement (56) einen zweiten Rand (62) umfasst, welcher im Wesentlichen linear ist, und wobei die Sitzvorrichtung (34) ein Gelenk (57) umfasst, welches an dem zweiten Rand (62) und dem ersten Rand (50) der Halterungsstruktur (32) montiert ist, so dass das zweite Sitzelement (56) schwenkbar an dem ersten Rand (50) montiert ist.

6. Struktureinheit (30) nach einem der vorhergehenden Ansprüche, wobei das zweite Sitzelement (56) einen dritten (63) und einen vierten (64) Rand umfasst, welche im Wesentlichen linear sind und einen Winkel (α) bilden, welcher zwischen 80° und 120° umfasst ist.

7. Struktureinheit (30) nach einem der vorhergehenden Ansprüche, wobei die Sitzvorrichtung (34) außerdem ein Lehnenelement (82) umfasst, welches an der Halterungsstruktur (32) fixiert ist.

8. Landfahrzeug (10), umfassend eine Fahrerkabine (14), wobei die Fahrerkabine (14) ein Bedienfeld (16) und einen Fahrersitz (18) umfasst, wobei die Fahrerkabine (14) außerdem eine Struktureinheit (30) nach einem der vorhergehenden Ansprüche umfasst.

9. Landfahrzeug (10) nach Anspruch 8, wobei sich die Struktureinheit (30) an einer lateralen Struktur (20) der Fahrerkabine (14) befindet.

## Revendications

1. Unité structurale (30) pour un véhicule terrestre (10), comprenant un dispositif de siège (34) et une structure de support (32), la structure de support (32) comprenant une surface supérieure (46), sensiblement horizontale, et une surface latérale (48), s'étendant sensiblement verticalement, les surfaces supérieure et latérale étant jointes par un premier bord (50) de la structure de support (32) ;
le dispositif de siège (34) comprenant un premier (54) et un second (56) élément d'assise, le premier élément d'assise (54) étant fixé à la surface supérieure (46) de la structure de support (32) et formant une première surface d'assise (58) sensiblement horizontale ;
le second élément d'assise (56) comprenant une seconde surface d'assise (60),
le second élément d'assise (56) étant assemblé de manière pivotante avec le premier bord (50) de la structure de support (32) entre une configuration pliée et une configuration dépliée,
de façon à ce que, dans la configuration pliée, la seconde surface d'assise (60) soit sensiblement parallèle à la surface latérale (48) de la structure de support (32) ; et que, dans la configuration dépliée, la seconde surface d'assise (60) soit sensiblement horizontale et continue avec la première surface d'assise (58), la première (58) et la seconde (60) surface d'assise formant une zone d'assise (68),
l'unité structurale (30) étant **caractérisée en ce qu'**elle comprend également un élément de maintien (36) assemblé de manière coulissante avec la structure de support (32) entre une position rétractée et une position déployée, de façon à ce que, dans la position déployée, l'élément de maintien (36) porte un poids du second élément d'assise (56) du dispositif de siège (34) dans la configuration dépliée.

2. Unité structurale (30) selon la revendication 1, dans laquelle l'élément de maintien (36) comprend : une cavité (78) agencée dans la structure de support (32) et s'ouvrant sur la surface latérale (48) ; et un bras (70) pouvant coulisser dans la cavité (78) entre les positions rétractée et déployée, de façon à ce que, dans la position déployée, une extrémité (76) du bras (70) soit en contact avec le second élément d'assise (56).

3. Unité structurale (30) selon la revendication 1 ou 2, comprenant également un premier (38) et un deuxième (40) organe d'interverrouillage, situés respectivement sur le second élément d'assise (56) du dispositif de siège (34) et sur l'élément de maintien (36), lesdits premier et deuxième organes d'interverrouillage pouvant fixer le second élément d'assise (56) dans la configuration dépliée à l'élément de maintien (36) dans la position déployée.

4. Unité structurale (30) selon l'une des revendications précédentes, comprenant également un troisième (42) et un quatrième (44) organe d'interverrouillage, situés respectivement sur le second élément d'assise (56) du dispositif de siège et sur la surface latérale (48) de la structure de support (32), lesdits troisième et quatrième organes d'interverrouillage pouvant fixer le second élément d'assise (56) dans la configuration pliée à la surface latérale (48).

5. Unité structurale (30) selon l'une des revendications précédentes, dans laquelle le second élément d'assise (56) comprend un deuxième bord (62), sensiblement linéaire, et dans laquelle le dispositif de siège (34) comprend une charnière (57) assemblée avec ledit deuxième bord (62) et avec le premier bord (50) de la structure de support (32), de façon à ce que le second élément d'assise (56) soit assemblé de manière pivotante avec le premier bord (50).

6. Unité structurale (30) selon l'une des revendications précédentes, dans laquelle le second élément d'assise (56) comprend un troisième (63) et un quatrième (64) bord, sensiblement linéaires et formant un angle (α) compris entre 80° et 120°.

7. Unité structurale (30) selon l'une des revendications précédentes, dans laquelle le dispositif de siège (34) comprend également un élément dossier (82), fixé à la structure de support (32).

8. Véhicule terrestre (10) comprenant une cabine de conduite (14), la cabine de conduite (14) comprenant un tableau de commande (16) et un siège conducteur (18), la cabine de conduite (14) comprenant également une unité structurale (30) selon l'une des revendications précédentes.

9. Véhicule terrestre (10) selon la revendication 8, dans lequel l'unité structurale (30) est située sur une structure latérale (20) de la cabine de conduite (14).
